# EUROPÄISCHE PATENTSCHRIFT

(11) **EP 2 013 502 B1**
(45) Veröffentlichungstag und Bekanntmachung des Hinweises auf die Patenterteilung: **17.03.2010**
(21) Anmeldenummer: 07724456.4
(22) Anmeldetag: 23.04.2007
(51) Int. Cl.: F16D 25/08, F16D 25/12

(54) **TRENNBARE KUPPLUNG FÜR EIN KRAFTFAHRZEUG MIT SELBSTTÄTIGER VERSCHLEIß- UND TEMPERATURNACHSTELLUNG**
SEPARABLE CLUTCH FOR A MOTOR VEHICLE WITH AUTOMATIC WEAR AND TEMPERATURE ADJUSTMENT
Accouplement séparable pour un véhicule automobile avec réajustage automatique en fonction de l'usure et de la température

(30) Priorität: 21.04.2006 DE 102006018555
(43) Veröffentlichungstag der Anmeldung: 14.01.2009
(73) Patentinhaber: Knorr-Bremse Systeme für Nutzfahrzeuge GmbH, 80809 München (DE)
(72) Erfinder: HERGES, Michael, 80935 München (DE)
(74) Vertreter: Schönmann, Kurt
(86) Internationale Anmeldenummer: PCT/EP2007/003526
(87) Internationale Veröffentlichungsnummer: WO 2007/121959

(56) Entgegenhaltungen:
- GB-A- 2 287 295
- US-A- 4 280 608
- BAUER H (ED): "Triebstrangvarianten" KRAFTFAHRTECHNISCHES TASCHENBUCH / BOSCH, WIESBADEN : VIEWEG & SOHN, DE, 13. Juni 2002 (2002-06-13), Seiten 653-655, XP008082160 ISBN: 3-528-13876-9 in der Anmeldung erwähnt

## Beschreibung

### Stand der Technik

Die Erfindung geht aus von einer trennbaren Kupplung für ein Kraftfahrzeug, welche einen Kupplungssteller umfassend einen verschieblich gelagerten Ausrücker zum Ein- und Auskuppeln der Kupplung beinhaltet.

Eine solche Kupplung ist aus dem Kraftfahrtechnischen Taschenbuch der Robert Bosch GmbH, 24. Auflage, Seite 654 bekannt. Bei der dort gezeigten Einscheiben-Trockenkupplung wird die Anpresskraft von mehreren Schraubenfedern erzeugt, die zwischen einem Kupplungsdeckel und einer Druckplatte angeordnet sind. Die Kupplungsfedem drücken im eingekuppelten Zustand die Kupplungsdruckplatte gegen die Kupplungsscheibe. Die Nabe der Kupplungsscheibe ist auf einer Kupplungswelle verschiebbar und überträgt durch ein Keilwellenprofil das Motordrehmoment auf die Kupplungswelle.

Der Kupplungssteller dieser Kupplung ist mechanisch betätigt, indem ein von einem Kupplungspedal betätigtes Kupplungsseil an einer Ausrückgabel angreift, welche andererseits auf den drehfest gelagerten Ausrücker wirkt, der hierdurch axial verschoben wird und die Kupplungsdruckplatte gegen die Kraft der Druckfedern von der Kupplungsscheibe abhebt, um den Kraftschluss zu lösen. Mit der Zeit verschleißt jedoch die Kupplungsscheibe, was in einem größer werdenden Kupplungsbetätigungsweg resultiert, so dass, um den Druckpunkt bei einem definierten Pedalweg zu halten, eine Verschleißnachstellung erfolgen muss. Dies wird bei der bekannten Kupplung dadurch bewerkstelligt, dass das eine Einstellhülse am Kupplungsseil nachgestellt wird. Temperaturänderungen der Kupplung, beispielsweise durch einen verstärkten Gebrauch unter hoher Last werden beim Stand der Technik durch Kupplungsspiel kompensiert.

Ein weitere kupplung ist z.B. aus GB 2 287 295 bekannt. Dieses Dokument zeigt die Merkmale des Oberbegriffes des Anspruchs 1.

Der vorliegenden Erfindung liegt demgegenüber die Aufgabe zugrunde, eine Kupplung der eingangs erwähnten Art derart weiter zu entwickeln, dass sie sich automatisch auf den jeweiligen Verschleißzustand und die jeweilige Temperatur einstellt und zugleich kostengünstig zu fertigen ist.

Diese Aufgabe wird erfindungsgemäß durch die Merkmale von Anspruch 1 gelöst.

### Vorteile der Erfindung

Die Erfindung beruht auf dem Gedanken, dass
a) der Kupplungssteller druckmittelbetätigt ist und folgendes umfasst :
b) einen auf den Ausrücker zum Ein- und Auskuppeln der Kupplung wirkenden Betätigungskolben, sowie
c) eine mit Druckmittel beaufschlagbare und von diesem entlastbare Druckkammer, welche einerseits durch wenigstens einen Teil des Betätigungskolbens begrenzt wird und andererseits durch wenigstens einen Teil eines Klemmkolbens, wobei
d) der Betätigungskolben, die Druckkammer und der Klemmkolben durch Federmittel gegen den Ausrücker in einer definierten Position federnd abgestützt sind, wobei die durch die Federmittel ausgeübte Kraft kleiner als eine zum Betätigen des Ausrückers notwenige Grenzkraft ist, und dass
e) bedingt durch eine bei einer Kupplungsbetätigung hervorgerufene Druckänderung in der Druckkammer der Klemmkolben eine Klemmvorrichtung derart betätigt, dass der Klemmkolben festgelegt wird bevor der Betätigungskolben den Ausrücker betätigt.

Vereinfacht bedeutet dies, dass die Druckkraft der Federmittel die axial verschieblich gelagerte Einheit wenigstens bestehend aus dem Betätigungskolben, der Druckkammer und dem Klemmkolben gegen den Ausrücker derart abstützt, dass diese zwar eine definierte Position einnehmen kann, aber die Druckkraft nicht ausreicht, um den Ausrücker zum Ein- oder Auskuppeln der Kupplung zu betätigen. Die momentane Position des Ausrückers relativ zu fest stehenden Teilen der Kupplung hängt unter anderem von dem momentanen Verschleißzustand der Kupplung und/oder von der momentanen Temperatur der Kupplungsscheibe ab, weil Verschleiß die Dicke der Kupplungsscheibe reduziert, während hohe Betriebstemperaturen eine größere Dicke der Kupplungsscheibe bedingen. Mit anderen Worten sorgt die relativ geringe Druckkraft der Federmittel dafür, dass die genannte Einheit stets gegen den seine Position abhängig vom Verschleißzustand und der Temperatur der Kupplung ändernden Ausrücker definiert abgestützt ist.

Für die Erfindung wesentlich ist darüber hinaus, dass durch eine einzige Druckänderung, insbesondere eine Drucksteigerung in der Druckkammer gleichzeitig zwei Funktionen ausgeübt werden. Zum einen wird zunächst der Klemmkolben in seiner momentanen, bis dahin lediglich durch die relativ geringe Druckkraft der Federmittel abgestützten Axialposition festgeklemmt und damit auch die mit ihm gekoppelte Druckkammer und der mit ihm gekoppelte Betätigungskolben in eine Ausgangslage für die folgende Kupplungsbetätigung gebracht. Letztere wird durch dieselbe Drucksteigerung in der Druckkammer hervorgerufen, indem sie eine Verschiebung des Betätigungskolbens bewirkt, welcher sich über das Druckmittelpolster in der Druckkammer am Klemmkolben abstützen kann. Die Verschiebung des Betätigungskolbens bedingt eine Betätigung des Ausrückers, welcher daraufhin die Kupplung ein- oder auskuppelt.

Würde man demgegenüber lediglich die Lage des Betätigungskolbens an den momentanen Verschleißzustand anpassen, so würde sich das Volumen der Druckkammer mit zunehmendem Verschleiß vergrößern, wodurch die das Druckmittel einsteuemden Magnetventile auf das bei dem größtmöglichen Verschleiß notwendige Druckmittelvolumen ausgelegt werden müssten und dementsprechend groß dimensioniert und teuer ausfallen würden. Darüber hinaus brächte eine solche Vorgehensweise Nachteile hinsichtlich der Regelbarkeit des Druckmittelvolumens mit sich, da dieses sich mit der Zeit ändern würde.

Da gemäß der Erfindung jedoch die Position der Einheit aus Betätigungskolben, Druckkammer und Klemmkolben an den jeweiligen Verschleiß- bzw. Temperaturzustand der Kupplung angepasst wird, bleibt das Volumen der Druckkammer über den gesamten Verschleißweg bzw. den gesamten Betriebstemperaturbereich im wesentlichen konstant, was sich positiv auf die Regelbarkeit des zur Betätigung der Kupplung verwendeten Druckmittelvolumens auswirkt. Nicht zuletzt kann die Druckkammer klein ausfallen, was kleine Strömungsquerschnitte in den vorgeordneten Magnetventilen bedingt, welche dadurch sehr klein und kostengünstig ausfallen können.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt sind wenigstens der Betätigungskolben, die Druckkammer und der Klemmkolben bezüglich einer einem Motor oder einem Getriebe zugeordneten An- oder Abtriebswelle koaxial verschieblich angeordnet. Dies spart Bauraum.

Der Klemmkolben kann durch die Klemmvorrichtung an einem mit einer Kupplungsglocke verbundenen, die An- oder Abtriebswelle koaxial umgebenden Rohrstück abstützbar sein, wobei mittels der Klemmvorrichtung ein Kraftschluss zwischen dem Klemmkolben und dem Rohrstück herstellbar ist, welcher auf dem Prinzip der Keilwirkung beruht. Dabei kann die Klemmvorrichtung durch wenigstens eine Feder in einer die Klemmung lösenden Richtung vorgespannt sein.

Die Federmittel können sich dann einerseits an der Kupplungsglocke abstützen. Weiterhin kann die Druckkammer zwischen dem Betätigungskolben und dem Klemmkolben ausgebildet sein, was ebenfalls eine sehr kompakte Konstruktion bedingt.

Gemäß einer besonders bevorzugten Ausführungsform ist der Betätigungskolben und der Klemmkolben innerhalb eines auf dem Rohrstück axial verschieblichen Zylinders gelagert, an welchem sich die Federmittel andererseits abstützen. Dann wird die Druckkammer durch eine Zylindermantelwand des Zylinders radial begrenzt und in der Zylindermantelwand kann ein Druckmittelanschluss zur Druckmittelversorgung der Druckkammer ausgebildet werden.

Gemäß einer Alternative können sich die Federmittel andererseits direkt am Klemmkolben abstützen. Dann ist der Klemmkolben durch die Federmittel in einer die Druckkammer verkleinernden Richtung oder in Verschleißnachstellrichtung vorgespannt.

Genaueres geht aus der folgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: ein schematische Darstellung einer trennbaren Kupplung gemäß ei- ner bevorzugten Ausführungsform der Erfindung,
- Fig.2: die Kupplung von Fig.2 in verschlissenem und unbetätigtem Zustand;
- Fig.3: die Kupplung von Fig.2 in verschlissenem und betätigtem Zustand;
- Fig.4: eine weitere Ausführungsform einer Klemmeinrichtung;
- Fig.5: ein schematische Darstellung einer trennbaren Kupplung gemäß ei- ner weiteren Ausführungsform der Erfindung;
- Fig.6: eine schematische Darstellung einer trennbaren Kupplung gemäß einer weiteren Ausführungsform der Erfindung.

### Beschreibung der Ausführungsbeispiele

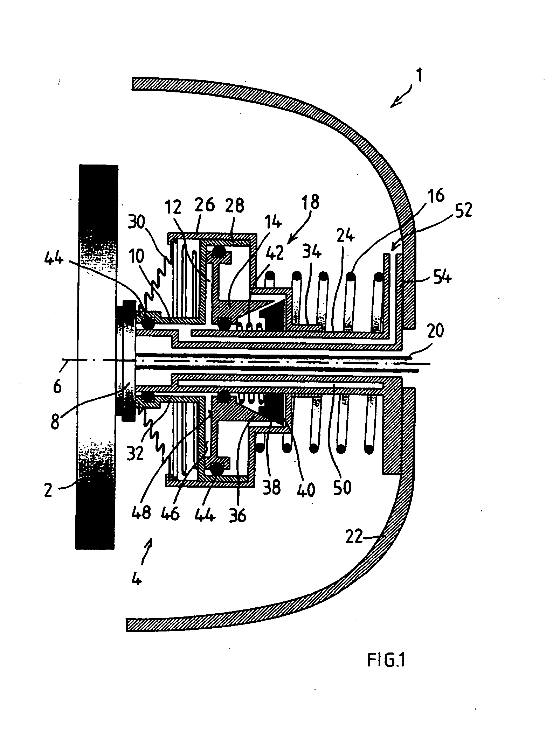

Die in Fig.1 schematisch gezeigte und mit der Bezugszahl 1 bezeichnete bevorzugte Ausführungsform einer trennbaren Kupplung ist zwischen einem Motor und einem Getriebe eines Fahrzeugs, insbesondere eines Nutzfahrzeugs angeordnet. Die Kupplung 1 beinhaltet einen hinreichend bekannten und deshalb hier nur als Einheit dargestellten Kraftübertragungsteil 2, bestehend aus einer Kupplungsdruckplatte, einer oder mehrerer Kupplungsfedern, welche diese Kupplungsdruckplatte gegen eine Kupplungsscheibe pressen sowie einem Schwungrad. Weiterhin beinhaltet sie einen druckmittelbetätigten, vorzugsweise pneumatisch betätigten Kupplungssteller 4, welcher wiederum einen bezüglich einer Kupplungslängsachse 6 axial verschieblich gelagerten Ausrücker 8 zum Ein- und Auskuppeln der Kupplung 1 umfasst. Der Ausrücker 8 besteht aus einem Axiallager und einem Druckring und wirkt in bekannter Weise über ein Hebelgestänge mit der Kupplungsdruckplatte zusammen, um diese abhängig von seiner Axialposition in Bezug auf die Kupplungslängsachse 6 gegen die Wirkung der Kupplungsfeder von der Kupplungsscheibe abzuheben bzw. mit dieser in reibschlüssigen Kraftschluss zu bringen.

Der Kupplungssteller umfasst weiterhin folgendes :
a) einen auf den Ausrücker 8 zum Ein- und Auskuppeln der Kupplung wirkenden Betätigungskolben 10, sowie
b) eine mit Druckmittel beaufschlagbare und von diesem entlastbare Druckkammer 12, welche einerseits durch wenigstens einen Teil des Betätigungskolbens 10 begrenzt wird und andererseits durch wenigstens einen Teil eines Klemmkolbens 14, wobei
c) der Betätigungskolben 10, die Druckkammer 12 und der Klemmkolben 14 durch Federmittel 16 gegen den Ausrücker 8 in einer definierten Position federnd abgestützt sind, wobei die durch die Federmittel 16 ausgeübte Kraft kleiner als eine zum Betätigen des Ausrückers 8 notwenige Grenzkraft ist, und wobei
e) bedingt durch eine bei einer Kupplungsbetätigung hervorgerufene Druckänderung in der Druckkammer 12 der Klemmkolben 14 eine Klemmvorrichtung 18 derart betätigt, dass der Klemmkolben 14 festgelegt wird bevor der Betätigungskolben 10 den Ausrücker 8 betätigt.

Besonders bevorzugt sind der Betätigungskolben 10, die Druckkammer 12 und der Klemmkolben 14 bezüglich der Kupplungslängsachse 6 koaxial verschieblich angeordnet, insbesondere bezüglich einer dem Getriebe zugeordneten Getriebeeingangswelle 20. Weiterhin ist die Druckkammer 12 zwischen wenigstens einem Teil 46 des Betätigungskolbens 10 und wenigstens einem Teil 48 des Klemmkolbens 14 ausgebildet. Der Klemmkolben 14 kann durch die Klemmvorrichtung 18 an einem mit einer fahrzeugfesten Kupplungsglocke 22 dreh- und axialfest verbundenen, die Getriebeeingangswelle 20 koaxial umgebenden Rohrstück 24 festlegbar sein, welches sich von der Kupplungsglocke 22 bis zum Kraftübertragungsteil 2 erstreckt. Die Federmittel 16, bevorzugt in Form wenigstens einer Schraubendruckfeder stützen sich einerseits an der Kupplungsglocke 22 ab.

Gemäß einer besonders bevorzugten Ausführungsform ist der Betätigungskolben 10 und der Klemmkolben 14 innerhalb eines Zylinders 26 gelagert, an welchem sich die Schraubendruckfeder 16 andererseits abstützt. Insbesondere kann der Klemmkolben 14 innerhalb eines Kolbenhemds 28 des Betätigungskolbens 10 verschieblich gelagert sein, welches wiederum im Zylinder 26 axial geführt ist. Der Zylinder 26 wird an seinem offenen, zum Kraftübertragungsteil 2 weisenden Ende bevorzugt von einem Gummibalg 30 verschlossen, welcher mit seinem ringförmigen Öffnungsrand auf einer Kolbenstange 32 des Betätigungskolbens 10 befestigt ist. Das andere Ende des Zylinders 26 ist mit einer Manschette 34 auf dem Rohrstück 24 axial verschieblich gelagert.

Die Klemmvorrichtung 18 beinhaltet den Klemmkolben 14 mit einem Keilabschnitt 36, der mit einem in Umfangsrichtung in mehrere separate Keilsegmente 38 unterteilten ringförmigen Klemmkeil 40 zusammenwirkt. Der Klemmkeil 40 umschließt das Rohrstück 24 vorzugsweise unmittelbar und durch den Klemmkolben 14 axial betätigt, wenn dieser mit seinem komplementär geformten Keilabschnitt 36 axial verschoben wird. Dabei werden die zunächst frei gängigen Keilsegmente 38 des Klemmkeils 40 durch Keilwirkung nach radial innen gegen das Rohrstück 24 gespannt, um einen Kraftschluss mit dem Rohrstück 24 herbeizuführen, der den Klemmkeil 40 axial- und drehfest am Rohrstück 24 festlegt.

Dabei sind der Klemmkolben 14 und der Klemmkeil 40 durch wenigstens eine Druckfeder 42 in einer die Klemmung lösenden Richtung vorgespannt, welche sich einerseits an einer radial inneren Schulter des Klemmkolbens 14 und andererseits am Klemmkeil 40 abstützt. Entsprechende Dichtungen 44 sorgen für eine dichtende Führung des Klemmkolbens 14 gegenüber dem Rohrstück 24 bzw. gegenüber dem Kolbenhemd 28 des Betätigungskolbens 10 sowie der Kolbenstange 32 des Betätigungskolbens 10 gegenüber dem Rohrstück 24.

Die Druckkammer 12 ist zwischen einer Wirkfläche 46 des Betätigungskolbens 10 und einer Wirkfläche 48 des Klemmkolbens 14 ausgebildet und wird durch das Kolbenhemd 28 des Betätigungskolbens 10 radial außen und durch das Rohrstück 24 radial innen begrenzt, wobei in einer Rohrwand des Rohrstücks 24 ein Druckmittelkanal 50 ausgebildet ist, welcher einerseits in die Druckkammer 12 und andererseits in einen Druckmittelanschluss 52 an einem tellerförmigen, kupplungsglockenseitigen Befestigungsflansch 54 des Rohrstücks 24 mündet. Als Druckmittel wird bevorzugt ohnehin am Nutzfahrzeug zur Betätigung der Bremsen vorhandene Druckluft verwendet. An den Druckmittelanschluss 52 ist eine hier nicht gezeigte Druckmittelleitung angeschlossen, welche Druckluft von einer ebenfalls nicht dargestellten Magnetventilanordnung heranführt, welche durch elektrische Signale eines elektronischen Steuergeräts gesteuert wird.

In Fig.1 ist die Kupplung 1 unbetätigt und in unverschlissenem Zustand gezeigt, d.h. die Kupplungsscheibe weist ihre maximale Dicke auf, wodurch der Ausrücker 8, der über den Hebelmechanismus mit der Kupplungsdruckplatte zusammenwirkt, einen relativ geringem Axialabstand zum Kraftübertragungsteil 2 aufweist.

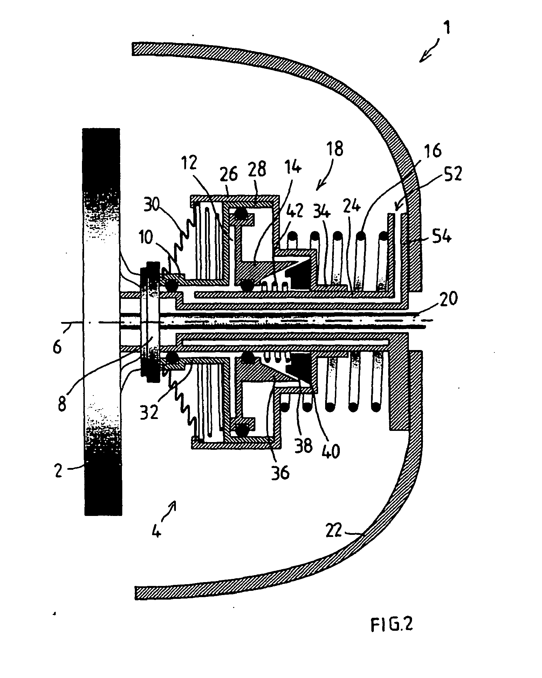

Demgegenüber zeigt Fig.2 die Kupplung 1 unbetätigt und in fortgeschrittenem Verschleißzustand, in welchem die Kupplungsscheibe eine geringere Dicke aufweist und der Ausrücker 8 deshalb eine weiter vom Kraftübertragungsteil 2 entfernt gelegene Axialposition einnimmt. Jedoch sorgt die Schraubendruckfeder 16 dafür, dass die Einheit aus Zylinder 26, Betätigungskolben 10, Druckkammer 12, Klemmkolben 14, Klemmkeil 40, Druckfeder 42 und Gummibalg 30 sich über die Kolbenstange 32 des Betätigungskolbens 10 stets in einer definierten Axialposition gegen den Ausrücker 8 abstützt, ohne diesen jedoch zu betätigen.

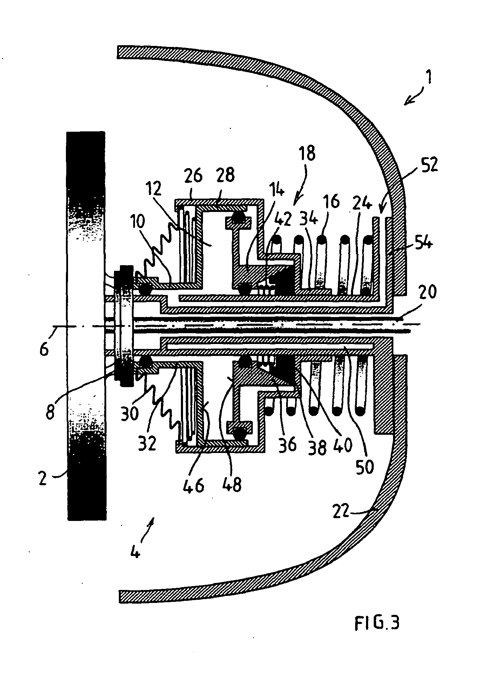

Vor diesem Hintergrund ist die Funktionsweise der erfindungsgemäßen Kupplung 1 wie folgt :
Ausgehend von der in Fig.2 gezeigten Ausgangslage drückt der Fahrer des Nutzfahrzeugs zur Betätigung der Kupplung ein hier nicht gezeigtes Kupplungspedal nieder. Der Betätigungsweg des Kupplungspedals wird von einem geeigneten Weg- oder Winkelaufnehmer gemessen und ein entsprechendes elektrisches Signal an das Steuergerät geleitet, welches Stellsignale für die Magnetventilanordnung aussteuert. Abhängig von diesen Stellsignalen erzeugt die Magnetventilanordnung ein bestimmtes Druckluftsignal am Druckmittelanschluss 52 des Kupplungsstellers 4, welches in der Druckkammer 12 zu einer Drucksteigerung führt. Alternativ kann der Kupplungsvorgang auch durch ein Steuergerät eines automatischen Getriebes eingeleitet werden. In diesem Fall erhält die Magnetventilanordnung die Stellsignale direkt vom Getriebesteuergerät. Durch die Drucksteigerung in der Druckkammer 12 werden gleichzeitig zwei Funktionen ausgeführt. Zum einen wird zuerst der Klemmkolben 14 in einer definierten Axialposition festgeklemmt, indem er mit seinem Keilabschnitt 36 in einer vom Ausrücker 8 weg weisenden Richtung (in Fig.3 nach rechts) gegen den Klemmkeil 40 gedrängt und dadurch die zunächst frei gängigen Keilsegmente 38 nach radial innen verschiebt, um einen Kraftschluss mit dem Rohrstück 24 herbeizuführen, der den Klemmkeil 40 und damit auch den Klemmkolben 14 axial- und drehfest am Rohrstück 24 festlegt. Diese Situation ist in Fig.3 dargestellt.

Somit ist auch der Zylinder 26 mit der Druckkammer 12, dem Betätigungskolben 10, der Druckfeder 42 und dem Gummibalg 30 in eine definierte axiale, am Ausrücker 8 abgestützte Ausgangslage für die zeitlich folgende Kupplungsbetätigung gebracht. Letztere wird durch dieselbe Drucksteigerung in der Druckkammer 12 hervorgerufen, indem sie eine Verschiebung des Betätigungskolbens 10 in einer gegenläufigen, vom Klemmkolben 14 weg weisenden Richtung (in Fig.3 nach links) bewirkt, wobei sich der Betätigungskolben 10 über das nun vorhandene Druckmittelpolster in der Druckkammer 12 am Klemmkolben 14 abstützen kann, der wiederum am axialfesten Klemmkeil 40 abgestützt ist. Die axiale Verschiebung des Betätigungskolbens 10 bedingt eine axiale Betätigung des Ausrückers 8 (in Fig.3 nach links), welcher daraufhin im Kraftübertragungsteil 2 die Kupplungsdruckplatte von der Kupplungsscheibe trennt, wodurch ausgekuppelt wird.

Zum Einkuppeln wird der Druck in der Druckkammer 12 durch die Magnetventilanordnung reduziert, wodurch der Betätigungskolben 10 bedingt durch die auf den Ausrücker 8 wirkende Druckkraft der Kupplungsfedem im Kraftübertragungsteil 2 sich in Richtung Klemmkolben 14 bewegen kann. Der nachlassende Druck in der Druckkammer 12 bewirkt weiterhin eine Reduzierung der axialen Druckkraft auf den Klemmkolben 14, wodurch dieser aufgrund der Federkraft der Druckfeder 42 wieder außer Eingriff mit dem Klemmkeil 40 gerät und dadurch der Kraftschluss zwischen dem Rohrstück 24 und dem Klemmkeil 40 aufgehoben wird. Hierdurch wird die Einheit bestehend aus Zylinder 26, Betätigungskolben 10, Druckkammer 12, Klemmkolben 14, Druckfeder 42 und Gummibalg 30 wieder vom Rohrstück 24 gelöst und gerät in den Ausgangszustand gemäß Fig.2, in welchem sie prinzipiell axial frei beweglich ist und lediglich durch die geringe Federkraft der Schraubendruckfeder 16 im Anschlag am Ausrücker 8 in definierter axialer Lage gehalten wird.

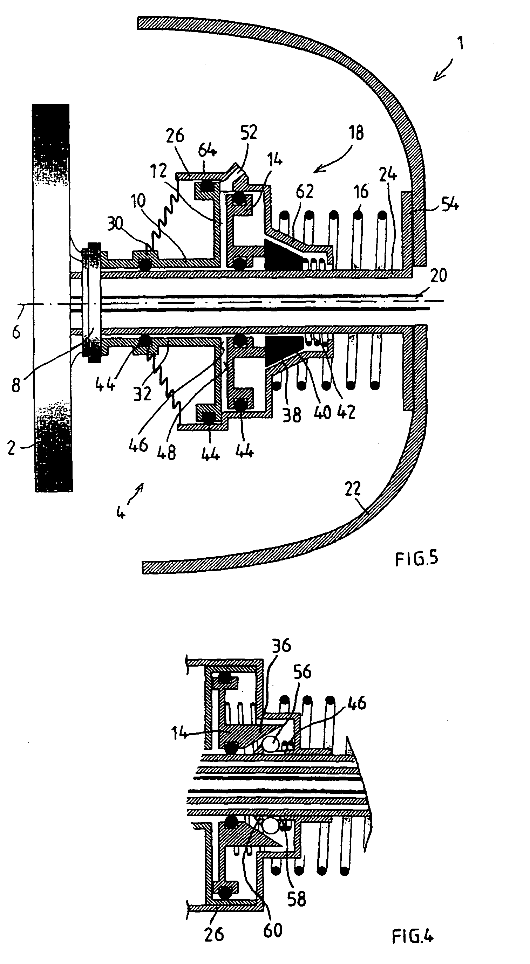

Fig.4 zeigt eine weitere Ausführungsform einer Klemmvorrichtung 18 mit mehreren über den Umfang verteilt angeordneten Klemmkugeln 56, welche in Durchgangsnuten 58 eines das Rohrstück 24 umgebenden Führungsrings 60 geführt sind, der vorzugsweise mit dem Zylinder 26 einstückig ausgeführt ist. Diese Klemmkugeln 56 werden dann bei der durch die Drucksteigerung in der Druckkammer 12 hervorgerufenen Axialbewegung des Klemmkolbens 14 durch dessen Keilabschnitt 36 so tief in die Durchgangsnuten 58 des Führungsrings 60 gedrückt, bis sie mit ihrer radial äußeren Umfangsfläche das Rohrstück 24 reibschlüssig kontaktieren, um einen Kraftschluss zwischen dem Klemmkolben 14 und dem Rohrstück 24 herzustellen. Mittels der Druckfeder 42 sind die Klemmkugeln 56 mit dem Rohrstück 24 in außer-Eingriffs-Richtung vorgespannt.

Bei dem weiteren Ausführungsbeispiel der Erfindung nach Fig.5 sind die gegenüber dem vorhergehenden Beispiel gleich bleibenden und gleich wirkenden Teile durch die gleichen Bezugszeichen gekennzeichnet. Im Unterschied zu diesem beinhaltet die Klemmvorrichtung 18 einen am Zylinder 26 komplementär zum Klemmkeil 40 ausgebildeten Keilabschnitt 62, welcher durch Keilwirkung mit diesem verspannbar ist. Der Klemmkolben 14 weist indessen keinen Keilabschnitt auf, sondern ist zylindrisch ausgebildet. Eine axiale Verschiebung des Klemmkeils 40 in den Keilabschnitt 62 des Zylinders 26 bewirkt, dass sich die zunächst frei gängigen Keilsegmente 38 nach radial innen verschieben, um einen Kraftschluss mit dem Rohrstück 24 herbeizuführen, der sowohl den Klemmkeil 40 als auch den Zylinder 26 mit dem Betätigungskolben 10, dem Klemmkolben 14, der Druckfeder 42 und dem Gummibalg 30 axial und drehfest am Rohrstück 24 festlegt.

Weiterhin ist der Klemmkolben 14 direkt an einer zylindrischen Mantelwand 64 des Zylinders 26 geführt, wodurch auch der Druckmittelanschluss 52 in dieser Mantelwand 64 ausgebildet werden kann.

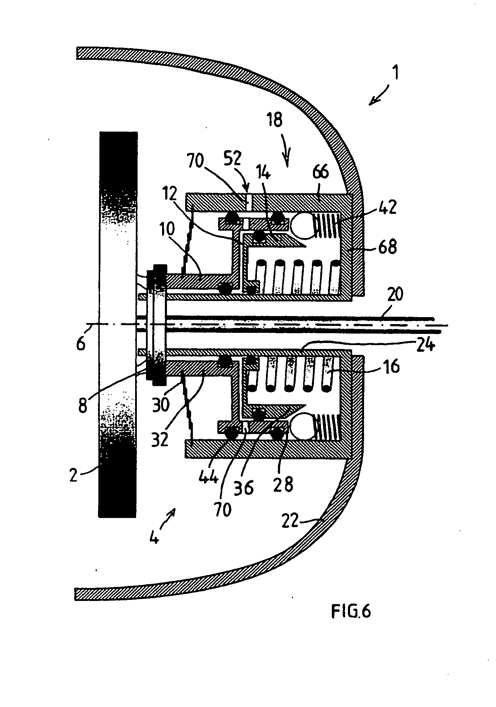

Gemäß der Alternative nach Fig.6 können sich die Federmittel 16 auch direkt am Klemmkolben 14 abstützen. Dann ist der Klemmkolben 14 durch die Federmittel 16 in einer die Druckkammer 12 verkleinernden Richtung vorgespannt. Über das Druckmittelpolster in der Druckkammer 12 oder auch durch direkten Anschlag wird diese Federkraft auf den Betätigungskolben 10 übertragen, welcher dann mit seiner Kolbenstange 32 gegen den Ausrücker 8 abgestützt wird.

Weiterhin könnte anstatt einer in Fig.1 bis Fig.5 gezeigten inneren Klemmung, bei welcher der Klemmkolben 14 mit dem Rohrstück 24 radial innen verklemmt wird, auch eine radial äußere Klemmung mit einer fahrzeugfesten, radial äußeren Mantelwand 66 herbeigeführt werden, welche beispielsweise zugleich den Klemmkolben 14 und den Betätigungskolben 10 führt und vorzugsweise mit dem Rohrstück 24 über einen an der Kupplungsglocke 22 befestigten Ringboden 68 einstückig ausgeführt ist. Über Durchgangsöffnungen 70 in der Mantelwand 66 und im Kolbenhemd 28 des Betätigungskolbens 10 kann dann die Druckkammer 12 belüftet werden. Die Klemmung kann wie beim Ausführungsbeispiel von Fig.4 mittels eines Zusammenwirkens eines Keilabschnitts 36 des Klemmkolbens 14 mit am inneren Umfang der äußeren Mantelwand 66 verteilt angeordneten Klemmkugeln 56 erfolgen. Weiterhin ist auch wie beim Ausführungsbeispiel von Fig.1 der Klemmkolben 14 innerhalb des Kolbenhemds 28 des Betätigungskolbens 10 axial geführt, welches wiederum in der Mantelwand 64 des Zylinders 26 verschieblich gelagert ist.

Die Erfindung ist nicht auf die hier beschriebenen Ausführungsbeispiele beschränkt. Vielmehr sind zahlreiche weitere Varianten vor allem im Hinblick auf die Ausgestaltung der druckmittelbetätigten Klemmvorrichtung denkbar. Auch ist eine Verschieblichkeit zumindest des Betätigungskolbens 10 und des Klemmkolbens 14 in Axialrichtung nicht zwingend notwendig, sondern deren Bewegungen könnten in beliebigen Richtungen stattfinden.

### Bezugszeichenliste

- 1: Kupplung
- 2: Kraftübertragungsteil
- 4: Kupplungssteller
- 6: Längsachse
- 8: Ausrücker
- 10: Betätigungskolben
- 12: Druckkammer
- 14: Klemmkolben
- 16: Federmittel
- 18: Klemmvorrichtung
- 20: Getriebeeingangswelle
- 22: Kupplungsglocke
- 24: Rohrstück
- 26: Zylinder
- 28: Kolbenhemd
- 30: Gummibalg
- 32: Kolbenstange
- 34: Manschette
- 36: Keilabschnitt
- 38: Keilsegmente
- 40: Klemmkeil
- 42: Druckfeder
- 44: Dichtungen
- 46: Wirkfläche
- 48: Wirkfläche
- 50: Druckmittelkanal
- 52: Druckmittelanschluss
- 54: Befestigungsflansch
- 56: Klemmkugeln
- 58: Durchgangsnuten
- 60: Führungsring
- 62: Keilabschnitt
- 64: Mantelwand
- 66: Mantelwand
- 68: Ringboden
- 70: Durchgangsöffnungen

## Patentansprüche

1. Trennbare Kupplung (1) für ein Kraftfahrzeug, welche einen Kupplungssteller (4) umfassend einen verschieblich gelagerten Ausrücker (8) zum Ein- und Auskuppeln der Kupplung (1) beinhaltet, wobei
a) der Kupplungssteller (4) druckmittelbetätigt ist und folgendes umfasst :
b) einen auf den Ausrücker (8) zum Ein- und Auskuppeln der Kupplung (1) wirkenden Betätigungskolben (10), sowie
c) eine mit Druckmittel beaufschlagbare und von diesem entlastbare Druckkammer (12) **dadurch gekennzeichnet, dass** die Druckkammer einerseits durch wenigstens einen Teil (46) des Betätigungskolbens (10) begrenzt wird und andererseits durch wenigstens einen Teil (48) eines Klemmkolbens (14), wobei
d) wenigstens der Betätigungskolben (10), die Druckkammer (12) und der Klemmkolben (14) durch Federmittel (16) gegen den Ausrücker (8) in einer definierten Position federnd abgestützt sind, und wobei die durch die Federmittel (16) ausgeübte Kraft kleiner als eine zum Betätigen des Ausrückers (8) notwenige Grenzkraft ist, und dass
e) bedingt durch eine bei einer Kupplungsbetätigung hervorgerufene Druckänderung in der Druckkammer (12) der Klemmkolben (14) eine Klemmvorrichtung (18) derart betätigt, dass der Klemmkolben (14) festgelegt wird bevor der Betätigungskolben (10) den Ausrücker (8) betätigt.

2. Kupplung nach Anspruch 1, **dadurch gekennzeichnet, dass** sich der Betätigungskolben (10) und der Klemmkolben (14) aufgrund der Druckänderung in der Druckkammer (12) gegenläufig verschieben.

3. Kupplung nach wenigstens einem der vorhergehenden Ansprüche, **dadurch gekennzeichnet, dass** wenigstens der Betätigungskolben (10), die Druckkammer (12) und der Klemmkolben (14) bezüglich einer einem Motor oder einem Getriebe zugeordneten An- oder Abtriebswelle (20) koaxial verschieblich angeordnet sind.

4. Kupplung nach Anspruch 3, **dadurch gekennzeichnet, dass** der Klemmkolben (14) durch die Klemmvorrichtung (18) an einem mit einer Kupplungsglocke (22) verbundenen, die An- oder Abtriebswelle (20) koaxial umgebenden fahrzeugfesten Rohrstück (24) abstützbar ist.

5. Kupplung nach Anspruch 4, **dadurch gekennzeichnet, dass** mittels der Klemmvorrichtung (18) ein Kraftschluss zwischen dem Klemmkolben (14) und dem Rohrstück (24) herstellbar ist, welcher auf dem Prinzip der Keilwirkung beruht.

6. Kupplung nach Anspruch 5, **dadurch gekennzeichnet, dass** die Klemmvorrichtung (18) durch wenigstens eine Feder (42) in einer die Klemmung lösenden Richtung vorgespannt ist.

7. Kupplung nach wenigstens einem der Ansprüche 4 bis 6, **dadurch gekennzeichnet, dass** in dem Rohrstück (24) ein Abschnitt (50) einer eine Steuerventileinrichtung mit der Druckkammer (12) verbindenden Druckmittelverbindung ausgebildet ist.

8. Kupplung nach wenigstens einem Ansprüche 4 bis 7, **dadurch gekennzeichnet, dass** sich die Federmittel (16) einerseits an der Kupplungsglocke (22) abstützen.

9. Kupplung nach Anspruch 8, **dadurch gekennzeichnet, dass** der Betätigungskolben (10) und der Klemmkolben (14) innerhalb eines auf dem Rohrstück (24) axial verschieblichen Zylinders (26) gelagert sind, an welchem sich die Federmittel (16) andererseits abstützen.

10. Kupplung nach Anspruch 9, **dadurch gekennzeichnet, dass** die Druckkammer (12) durch eine Zylindermantelwand (64) des Zylinders (26) radial begrenzt wird.

11. Kupplung nach Anspruch 10, **dadurch gekennzeichnet, dass** in der Zylindermantelwand (64) ein Druckmittelanschluss (52) zur Druckmittelversorgung der Druckkammer (12) ausgebildet ist.

12. Kupplung nach wenigstens einem der Ansprüche 1 bis 8, **dadurch gekennzeichnet, dass** sich die Federmittel (16) andererseits am Klemmkolben (14) abstützen.

13. Kupplung nach Anspruch 12, **dadurch gekennzeichnet, dass** der Klemmkolben (14) durch die Federmittel (16) in einer die Druckkammer (12) verkleinernden Richtung vorgespannt ist.

14. Kupplung nach wenigstens einem der vorhergehenden Ansprüche, **dadurch gekennzeichnet, dass** die Druckkammer (12) zwischen dem Betätigungskolben (10) und dem Klemmkolben (14) ausgebildet ist.

## Claims

1. A separable clutch (1) for a motor vehicle, which separable clutch (1) has a clutch adjuster (4) comprising a movably mounted clutch operator (8) for engaging and disengaging the clutch (1), wherein
a) the clutch adjuster (4) is pressure-medium-actuated and comprises the following:
b) an actuating piston (10) which acts on the clutch operator (8) for engaging and disengaging the clutch (1), and
c) a pressure chamber (12) which can be acted on with pressure medium and relieved of said action,
**characterized in that** the pressure chamber is delimited at one side by at least a part (46) of the actuating piston (10) and at the other side by at least a part (48) of a clamping piston (14), with
d) at least the actuating piston (10), the pressure chamber (12) and the clamping piston (14) being resiliently supported against the clutch operator (8) in a defined position by spring means (16), and with the force which is exerted by the spring means (16) being lower than a limit force which is required for actuating the clutch operator (8), and **in that**,
e) on account of a pressure change in the pressure chamber (12) caused by a clutch actuation, the clamping piston (14) actuates a clamping device (18) in such a way that the clamping piston (14) is fixed before the actuating piston (10) actuates the clutch operator (8).

2. The clutch as claimed in claim 1, **characterized in that** the actuating piston (10) and the clamping piston (14) are moved in opposite directions on account of the pressure change in the pressure chamber (12).

3. The clutch as claimed in at least one of the preceding claims, **characterized in that** at least the actuating piston (10), the pressure chamber (12) and the clamping piston (14) are arranged so as to be movable coaxially with respect to a drive input or drive output shaft (20) which is assigned to an engine or to a transmission.

4. The clutch as claimed in claim 3, **characterized in that** the clamping piston (14) can be supported by means of the clamping device (18) on a tube piece (24) which is connected to a clutch bell (22) and which coaxially surrounds the drive input or drive output shaft (20).

5. The clutch as claimed in claim 4, **characterized in that** a force-fitting action, which is based on the principle of a wedge effect, can be produced between the clamping piston (14) and the tube piece (24) by means of the clamping device (18).

6. The clutch as claimed in claim 5, **characterized in that** the clamping device (18) is preloaded by means of at least one spring (42) in a direction which releases the clamping action.

7. The clutch as claimed in at least one of claims 4 to 6, **characterized in that** a section (50) of a pressure medium connection which connects a control valve device to the pressure chamber (12) is formed in the tube piece (24).

8. The clutch as claimed in at least one of claims 4 to 7, **characterized in that** the spring means (16) are supported at one side on the clutch bell (22).

9. The clutch as claimed in claim 8, **characterized in that** the actuating piston (10) and the clamping piston (14) are mounted within a cylinder (26) which is axially movable on the tube piece (24) and against which the spring means (16) are supported at the other side.

10. The clutch as claimed in claim 9, **characterized in that** the pressure chamber (12) is delimited radially by a cylinder casing wall (64) of the cylinder (26).

11. The clutch as claimed in claim 10, **characterized in that** a pressure medium connection (52) for a supply of pressure medium to the pressure chamber (12) is formed in the cylinder casing wall (64).

12. The clutch as claimed in at least one of claims 1 to 8, **characterized in that** the spring means (16) are supported at the other side on the clamping piston (14).

13. The clutch as claimed in claim 12, **characterized in that** the clamping piston (14) is preloaded by the spring means (16) in a direction which reduces the size of the pressure chamber (12).

14. The clutch as claimed in at least one of the preceding claims, **characterized in that** the pressure chamber (12) is formed between the actuating piston (10) and the clamping piston (14).

## Revendications

1. Accouplement (1) séparable pour un véhicule automobile, qui comporte un régleur (4) d'accouplement, comprenant un dispositif (8) de débrayage, qui est monté coulissant pour accoupler et désaccoupler l'accouplement (1), dans lequel :
a) le régleur (4) d'accouplement est actionné par un fluide sous pression et comprend ce qui suit :
b) un piston (10) d'actionnement, agissant sur le dispositif (8) de débrayage, pour accoupler et désaccoupler l'accouplement (1), ainsi que
c) une chambre (12) sous pression, pouvant être alimentée par du fluide sous pression et pouvant en être déchargée, **caractérisé en ce que** la chambre sous pression est délimitée, d'une part, par au moins une partie (46) du piston (10) d'actionnement et, d'autre part, par au moins une partie (48) d'un piston (14) de serrage, dans lequel
d) au moins le piston (10) d'actionnement, la chambre (12) sous pression et le piston (14) de serrage sont appuyés élastiquement en une position définie par des moyens (16) à ressort sur le dispositif (8) de débrayage et dans lequel la force appliquée par les moyens (16) à ressort est plus petite qu'une force limite nécessaire pour actionner le dispositif (8) de débrayage, et **en ce que**
e) en raison de la variation de pression dans la chambre (12) sous pression, provoquée lors d'un actionnement de l'accouplement, le piston (14) de serrage actionne le dispositif (18) de serrage de manière à ce que le piston (14) de serrage soit fixé avant que le piston (10) d'actionnement actionne le dispositif (8) de débrayage.

2. Accouplement suivant la revendication 1, **caractérisé en ce que** le piston (10) d'actionnement et le piston (14) de serrage se déplacent en sens contraire par la variation de pression dans la chambre (12) sous pression.

3. Accouplement suivant au moins l'une des revendications précédentes, **caractérisé en ce qu'**au moins le piston (10) d'actionnement, la chambre (12) sous pression et le piston (14) de serrage sont montés coulissants coaxialement par rapport à un arbre (20) menant ou mené associé à un moteur ou à un entraînement.

4. Accouplement suivant la revendication 3, **caractérisé en ce que** le piston (14) de serrage peut être appuyé par le dispositif (18) de serrage sur une pièce (24) tubulaire fixe sur le véhicule, reliée à une cloche (22) d'accouplement et entourant coaxialement l'arbre (20) menant ou mené.

5. Accouplement suivant la revendication 4, **caractérisé en ce qu'**une application de force, qui repose sur le principe de l'effet de coin, peut être faite entre le piston (14) de serrage et la pièce (24) tubulaire.

6. Accouplement suivant la revendication 5, **caractérisé en ce que** le dispositif (18) de serrage est précontraint dans une direction desserrant le serrage par au moins un ressort (42).

7. Accouplement suivant au moins l'une des revendications 4 à 6, **caractérisé en ce qu'**il est constitué dans la pièce (24) tubulaire un tronçon (50) d'une communication par fluide de pression, mettant un dispositif de vanne de commande en communication avec la chambre (12) sous pression.

8. Accouplement suivant au moins l'une des revendications 4 à 7, **caractérisé en ce que** les moyens (16) à ressort s'appuient d'une part sur la cloche (22) de l'accouplement.

9. Accouplement suivant la revendication 8, **caractérisé en ce que** le piston (10) d'actionnement et le piston (14) de serrage sont montés à l'intérieur d'un cylindre (26) coulissant axialement sur la pièce (24) tubulaire et sur lequel s'appuient les moyens (16) à ressort.

10. Accouplement suivant la revendication 9, **caractérisé en ce que** la chambre (12) sous pression est délimitée radialement par une paroi (64) de la surface latérale du cylindre (26).

11. Accouplement suivant la revendication 10, **caractérisé en ce que**, dans la paroi (64) de la surface latérale du cylindre, est formé un raccord (52) pour du fluide sous pression, pour l'alimentation en fluide sous pression de la chambre (12) sous pression.

12. Accouplement suivant au moins l'une des revendications 1 à 8, **caractérisé en ce que** les moyens (16) à ressort s'appuient d'autre part sur le piston (14) de serrage.

13. Accouplement suivant la revendication 12, **caractérisé en ce que** le piston (14) de serrage est précontraint par les moyens (16) à ressort dans un sens rapetissant la chambre (12) sous pression.

14. Accouplement suivant au moins l'une des revendications précédentes, **caractérisé en ce que** la chambre (12) sous pression est formée entre le piston (10) d'actionnement et le piston (14) de serrage.
